# EUROPEAN PATENT APPLICATION

(11) **EP 4 650 262 A1**
(43) Date of publication of application: **19.11.2025**
(21) Application number: 24176385.3
(22) Date of filing: 16.05.2024
(51) Int. Cl.: B62J 45/411, B62J 45/421, B62M 6/50

(54) **BOTTOM BRACKET, A BICYCLE WITH THE BOTTOM BRACKET AND A METHOD FOR DETECTING A TORQUE IN THE BICYCLE**

(71) Applicant: MAHLE International GmbH, 70376 Stuttgart (DE)
(72) Inventor: GARCIA, Gonzalo, 14012 Cordoba (ES); ESTEVE SERAL, Luis Tirso, 50800 Zuera (Zaragoza) (ES)
(74) Representative: BRP Renaud & Partner mbB Rechtsanwälte Patentanwälte Steuerberater

(57) **Abstract**

The invention relates to a bottom bracket (1) of a bicycle (17) with a control unit (3) and at least one torque sensor (8a, 8b). The control unit (3) comprises a gyroscope (10) for calibrating the torque sensor (8a, 8b) depending on their offset rotational position.

The invention also relates to a bicycle (17) with the bottom bracket (1) and a method for detecting a torque in the bicycle (17).

## Description

The invention relates to a bottom bracket of a bicycle according to the generic term of claim 1. The invention also relates to a bicycle with the bottom bracket and a method for detecting a torque in the bicycle.

A bottom bracket of a bicycle is arranged in a frame of the bicycle and supports a shaft to which a crankset is attached. If the bicycle contains an electric motor, the cadence and torque can be detected in the bottom bracket and used to control the electric motor. To detect the torque, the bottom bracket can contain one or more torque sensors formed by strain gauges. The torque sensors i.e. strain gauges are arranged in such a way that they are aligned perpendicular to the direction of the crank force. Since the bottom bracket is always under stress when the bicycle is used, a rotation of the bottom bracket about its axis in the frame of the bicycle or a bad assembly can occur. To avoid the problem of the accuracy, four torque sensors can be used to detect the torque. This solution is disadvantageously expensive. Alternatively, a poka-yoke-unit can be used to prevent the rotation of the bottom bracket in the frame. The manufacturing of the bottom bracket with a poka-yoke-unit is disadvantageously more complex and therefore more expensive in the bike because of needing to add a tab in the bottom bracket housing.

US20230194365A1 discloses a bottom bracket load sensor designed to measure the deformation of the end bearings of the bottom bracket as a result of the pedalling force.

It is therefore the object of the invention to provide an improved or at least alternative embodiment for a bottom bracket of a bicycle of the type described, in which the described disadvantages are overcome. It is also the task of the invention to provide a corresponding bicycle with the bottom bracket and a corresponding method for detecting a torque in the bicycle.

These objects are solved according to the invention by the subject matter of the independent claims. Advantageous embodiments are the subject of the dependent claims.

The present invention is based on the general idea to use a gyroscope to detect a rotational position of the torque sensor and to calibrate the torque sensor depending on the detected rotational position.

A bicycle bottom bracket according to the invention comprises a hollow cylindrical body with a longitudinal center axis. Furthermore, the bottom bracket comprises at least one torque sensor, preferably at least one strain gauge, and a control unit electrically conductively connected to the torque sensor. The torque sensor is attached i.e. fixed i.e. fastened to the body. According to the invention, the control unit comprises a gyroscope for determining a rotational position of the body and thereby of the at least one torque sensor with respect to the longitudinal center axis of the body.

In the bottom bracket according to the invention, the actual rotational position of the body and thus of the torque sensor can be determined depending on the arrangement i.e. the orientation of the gyroscope relative to the horizontal. Based on the rotational position of the torque sensor, the torque sensor can be calibrated and the calculated torque can be corrected according to the actual rotational position of the torque sensor. Therefore, the torque can be calculated with high accuracy. In other words, even if the orientation i.e. the arrangement of the torque sensor deviates by a few degrees from the angle of 90° to the direction of the crank force, the torque can be corrected and thereby calculated accurately. Further, no poka-yoke-unit and no additional torque sensor are required, so that the manufacture and/or the assembling of the bottom bracket can be simplified. In particular, conventional tools and conventional methods can be used to install the bottom bracket into the frame of the bicycle.

The torque in the bottom bracket is detected by means of the torque sensor. The torque sensor is preferably a strain gauge via which a deformation of the body can be detected. The force acting on the body and finally the torque can be calculated from the deformation of the body i.e. of the strain gauge. The deformation of the strain gauge can be detected by means of the control unit, which is electrically connected to the torque sensor i.e. the strain gauge. The force and/or torque can then be calculated by means of the control unit. The respective torque sensor can be connected to the control unit in an electrically conductive manner.

The control unit can be designed in the suitable manner for calculating the torque and can, for example, comprise a microprocessor and/or a memory and/or further electrical and/or electronic components. The control unit can be electrically connected to the outside by means of a cable. Via the cable, the control unit can be connected, for example, to a control system of an electric motor of the bicycle. Especially, the control unit can forward the calculated torque to the control system for controlling the electric motor of the bicycle.

The control unit can be formed in particular by a printed circuit board. The gyroscope can then be attached i.e. fixed i.e. fastened to the printed circuit board in a predefined unchangeable position. The printed circuit board can be attached i.e. fixed i.e. fastened to the body in a predefined unchangeable position relative to the torque sensor. The torque sensor can be attached i.e. fixed i.e. fastened to the body in a predefined unchangeable position relative to each other. This can ensure that the gyroscope and the torque sensor are fixedly aligned to each other, and that the detection of the rotational position of the torque sensor cannot be falsified.

If the control unit is formed by a printed circuit board, the printed circuit board can be attached i.e. fixed i.e. fastened to an outer surface of the body which surrounds the longitudinal center axis of the body with a radial distance. In particular, the printed circuit board can be attached to a carrier and the carrier can be screwed to the body of the bottom bracket. To protect the printed circuit board from the external influences, a cover can be provided to cover the printed circuit board. Thereby, the cover can be screwed or clipped or glued to the body or to the carrier. Below the printed circuit board, the body can comprise an opening through which the printed circuit board can be electrically conductively connected to the torque sensor. As described above, the printed circuit board can be electrically connected to the torque sensor.

The torque sensor may be attached i.e. fixed i.e. fixed to an inner surface of the body which surrounds the longitudinal center axis of the body with a distance. For example, the torque sensor can be glued on the inner surface of the body. On the inner surface of the body, the torque sensor are protected from the external influences and can be protected from damage, in particular, when the bottom bracket or the body of the bottom bracket is rotated in the frame of the bicycle. If at least two torque sensors are provided, the torque sensors can be arranged radially opposite each other with respect to the longitudinal center axis of the body. In other words, a connecting line between the two torque sensors can lie on the longitudinal central axis of the body.

The invention also relates to a bicycle with the bottom bracket described above. In addition to the bottom bracket, the bicycle comprises a frame and a rear axle with a longitudinal central axis. The bottom bracket is arranged in and attached to the frame of the bicycle. Thereby, the bottom bracket can be pressed into the frame. The bottom bracket and the rear axle are aligned to each other in such a way, that the longitudinal center axis of the body of the bottom bracket and the longitudinal center axis of the rear axle are aligned parallel to each other. In addition, the bottom bracket and the rear axle can be aligned to each other in such a way, that the torque sensor of the bottom bracket can detect a force acting on the bottom bracket. The bicycle also comprises an electric motor and, optionally, a control system for controlling the electric motor. The control system of the electric motor can be electrically conductively connected to the control unit of the bottom bracket.

The invention also relates to a method for detecting a torque in the bicycle described above. In the method, during the use of the bicycle, a force acting on the bottom bracket is detected by means of the torque sensor of the bottom bracket and a value representing the torque is calculated from the detected force by means of the control unit of the bottom bracket. Then, the control unit of the bottom bracket forwards the calculated value representing the torque to a control system of the electric motor of the bicycle. According to the invention, before the first use of the bicycle, an offset rotational position of the body of the bottom bracket and thereby of the torque sensor of the bottom bracket with respect to the longitudinal center axis of the body is detected by means of a gyroscope of the control unit of the bottom bracket. Then, the torque sensor of the bottom bracket is calibrated in accordance with the offset rotational position by means of the control unit of the bottom bracket.

The value representing the torque can in particular be the torque.

The value representing the toque will also be referred to as "torque" for short in the following.

In the method according to the invention, the offset rotational position of the body of the bottom bracket and thus of the torque sensor of the bottom bracket can be determined depending on the arrangement i.e. the orientation of the gyroscope relative to the horizontal. Based on the offset rotational position of the torque sensor, the torque sensor can be calibrated before the first use of the bicycle. In this way, the accurate calculation of the value representing the torque in the bicycle is possible, even if the orientation i.e. the arrangement of the torque sensor deviates by a few degrees from the necessary angle of 90° to the direction of the crank force in the bicycle. The said deviating orientation i.e. the arrangement of the torque sensor can arise, for example, during the installation of the bottom bracket in the frame or by using of the bicycle. In the method according to the invention, the deviating orientation i.e. the arrangement of the torque sensor can be taken into account and the torque can be calculated with high accuracy.

During the use of the bicycle, a current rotational position of the body of the bottom bracket and thereby of the torque sensor of the bottom bracket with respect to the longitudinal central axis of the body can be detected by means of the gyroscope of the control unit of the bottom bracket. Then, the torque sensor of the bottom bracket can be recalibrated in accordance with the current rotational position by means of the control unit of the bottom bracket. If the bottom bracket in the frame of the bicycle rotates as a result of use of the bicycle, a recalibration can be carried out to take this rotation into account. In other words, the method can take into account and correct the rotation of the torque sensor in the frame of the bicycle due to use. As a result, over the useful life of the bicycle, the torque can always be accurately determined and the electric motor of the bicycle can be precisely controlled.

During the use of the bicycle, a current rotational position of the body of the bottom bracket and thereby of the torque sensor of the bottom bracket with respect to the longitudinal central axis of the body can be detected by means of the gyroscope of the control unit of the bottom bracket. Then, a rotation of the body of the bottom bracket and thereby of the torque sensor of the bottom bracket around the longitudinal center axis of the body can be determined from the offset rotational position and the current rotational position by means of the control unit of the bottom bracket. In other words, it can be determined during the use of the bicycle how much the bottom bracket is already twisted i.e. rotated in the frame. When the rotation of the body of the bottom bracket and thereby of the torque sensor of the bottom bracket around the longitudinal center axis of the body exceeds a predefined value, the control unit of the bottom bracket can output a warning signal to a user. The warning signal can thus inform the user that the bottom bracket is already twisted i.e. rotated too much and that undesirable consequences - such as tearing off the cables - can possibly occur. In this way, the appropriate measures can be initiated in good time.

During the use of the bicycle, data relating to a current tilting position of the bottom bracket with respect to the horizontal and/or a current tilting angle of the bottom bracket with respect to the horizontal and/or a current acceleration of the bottom bracket and/or a current air time of the bicycle can be detected by means of the gyroscope of the control unit of the bottom bracket. Then, the control unit of the bottom bracket can forward the detected data to the control system of the electric motor of the bicycle. Using the data, the control system of the electric motor can determine whether the user is currently riding uphill or riding downhill or turning or jumping, and adjust the power of the electric motor accordingly.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1 and 2: views of a bottom bracket according to the invention without and with a cover;
- Fig. 3: a sectional view of the bottom bracket according to the invention with torque sensors;
- Figs. 4 to 6: sectional exploded views of the bottom bracket according to the invention;
- Fig. 7: a sectional view of a bicycle according to the invention with the bottom bracket according to the invention.

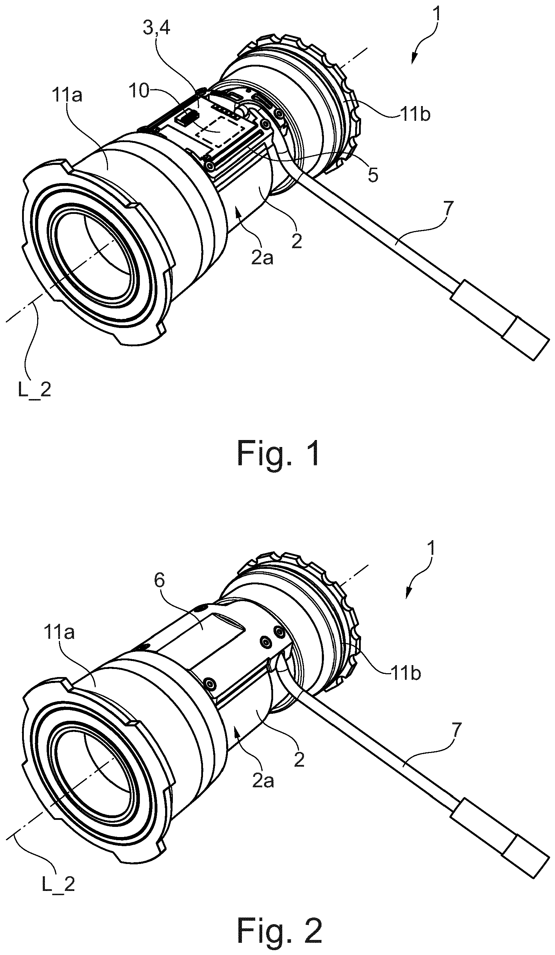

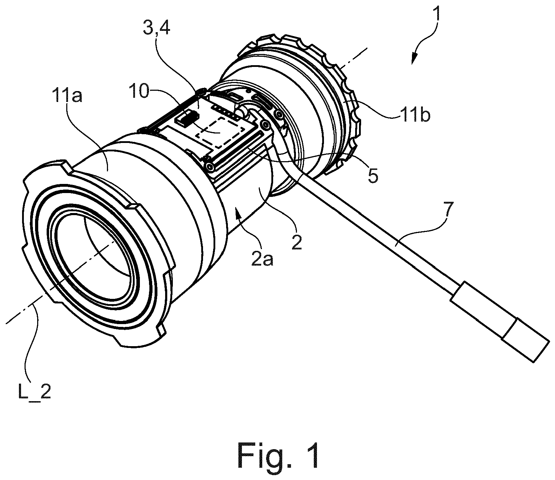

Fig. 1 and Fig. 2 each show a view of a bottom bracket 1 according to the invention. With reference to Fig. 1, the bottom bracket 1 comprises a hollow cylindrical body 2 with a longitudinal center axis L_2 and a control unit 3. The control unit 3 is formed by a printed circuit board 4 and is fixed i.e. attached to an outer surface 2a of the body 2. The printed circuit board 4 is thereby supported by a carrier 5, which is screwed to the body 2 and thereby fixed i.e. attached to the body 2. The printed circuit board 4 is connected to the outside via a cable 7 in an electrically conductive manner. With reference to Fig. 2, the body 2 comprises a cover 6 which covers the printed circuit board 4 to the outside. The cover 6 is screwed to the carrier 5. Referring to Fig. 1 and Fig. 2, the bottom bracket 1 further comprises a left cap 11a and a right cap 11b, each fixed to the body 2 axially opposite to each other. The bottom bracket 1 will be described in more detail below.

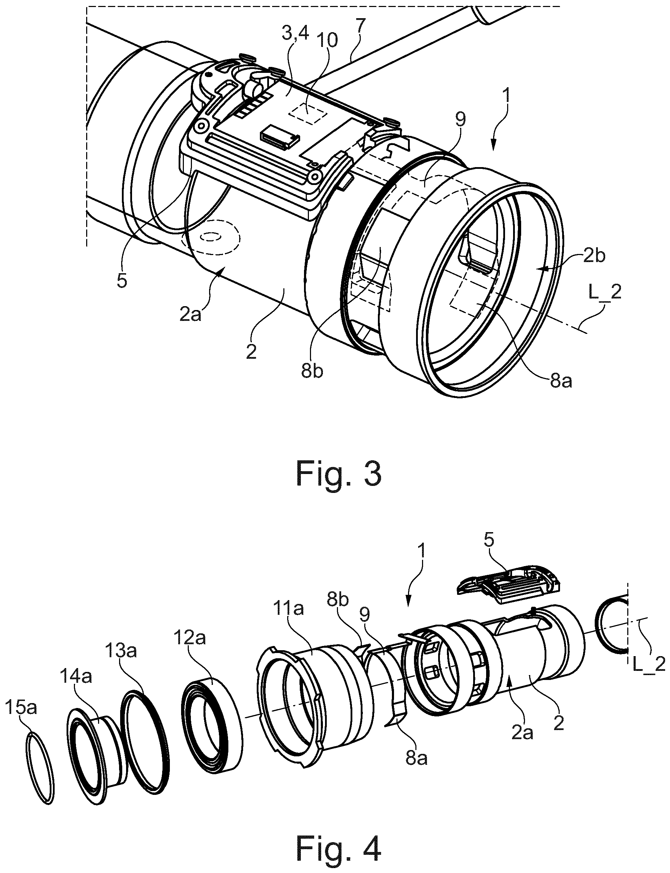

Fig. 3 shows a sectional view of the bottom bracket 1 according to the invention. Here, the body 2 of the bottom bracket 1 is shown partially transparent so that two torque sensors 8a and 8b are visible. The torque sensors 8a and 8b are arranged opposite each other on an inner surface 2b of the body 2. In this embodiment, the torque sensors 8a and 8b are formed by two strain gauges glued i.e. bonded to the inner surface 2b of the body 2. The torque sensors 8a and 8b are each electrically connected to the printed circuit board 4 via a flexible flat cable 9. The printed circuit board 4 and the torque sensors 8a and 8b are aligned in a predefined and invariable and fixed position with respect to each other.

The printed circuit board 4 also comprise a gyroscope 10, which is arranged here on the printed circuit board 4 facing away the cover 6. The gyroscope 10 is not directly visible here and is marked with a broken line. The gyroscope 10 is fixed i.e. attached to the printed circuit board 4 in a predefined and invariable and fixed position, and can detect the rotational position of the body 2 and thereby of the torque sensors 8a and 8b. Based on the detected rotational position of the torque sensors 8a and 8b, the torque sensors 8a and 8b can be calibrated before the first use of the bicycle and/or recalibrated during the use of the bicycle. As a result, the torque calculated by the printed circuit board 4 can be corrected and determined with a high accuracy regardless of the actual chanced rotational position of the body 2 of the bottom bracket 1. It is understood that the printed circuit board 4 can also comprise, in addition to the gyroscope 10, further electrical and/or electronic components for detecting and/or calculating the torque and/or for forwarding the results.

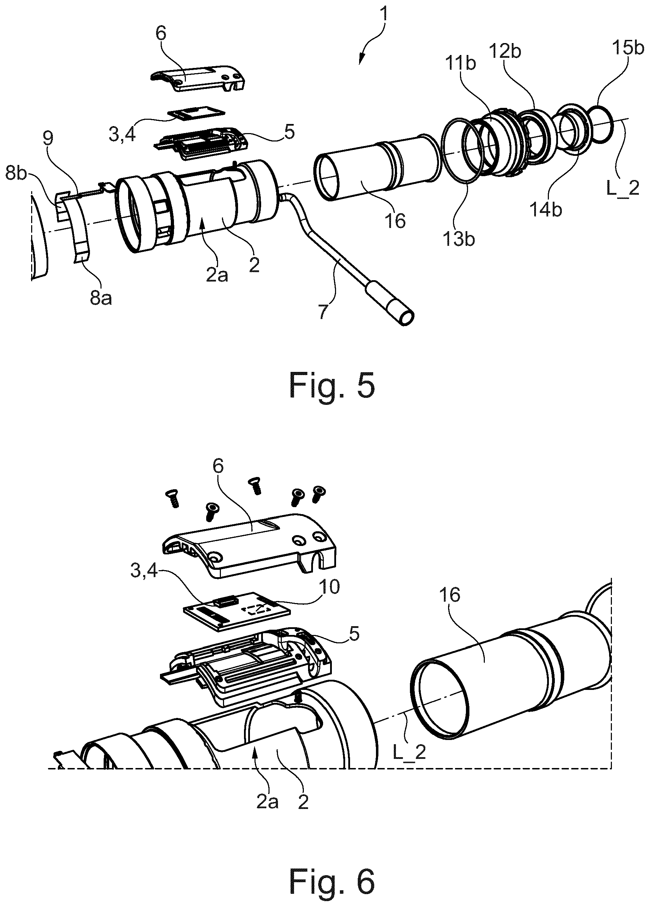

Fig. 4 to Fig. 6 show exploded sectional views of the bottom bracket 1 according to the invention. In Fig. 4, the bottom bracket 1 is shown from the side of the left cap 11a. In Fig. 5, the bottom bracket 1 is shown from the side of the right cap 11b. In Fig. 6, the bottom bracket is shown from the side of the cap 6.

Referring to Fig. 4, the bottom bracket 1 comprises in addition to the left cap 11a a bearing 12a, a gasket 13a, a bearing adapter 14a and an O-ring seal 15a. In this case, the bearing 12a, the gasket 13a, the bearing adapter 14a, and the O-ring seal 15a are received in the left cap 11a, and the cap 11a is fixed i.e. attached to the body 2 of the bottom bracket 1. In Fig. 4, the torque sensors 8a and 8b, the flexible flat cable 9, the body 2 and the carrier 5 can also be seen.

Referring to Fig. 5, the bottom bracket 1 comprises in addition to the right cap 11b a bearing 12b, an O-ring seal 13b, a bearing adapter 14b, and an O-ring seal 15b. In this case, the bearing 12b, the O-ring seal 13b, the bearing adapter 14b, and the O-ring seal 15b are received in the right cap 11b, and the right cap 11b is fixed i.e. attached to the body 2 of the bottom bracket 1. In Fig. 5, the torque sensors 8a and 8b, the flexible flat cable 9, the body 2, the carrier 5, the printed circuit board 4 and the cover 6 can also be seen. Furthermore, a magnetic ring 16 of the bottom bracket 1 for detecting of cadence is shown in Fig. 5.

In Fig. 6, the bottom bracket 1 is shown from the side of the cover 6. As can be seen in Fig. 6, the carrier 5 is screwed to the body 2 and the cover 6 is screwed to the carrier 5. The printed circuit board 4 is attached to the carrier 5 and protected from the outside by the cover 6. The flexible flat cable 9 is guided between the cover 6 and the printed circuit board 4 and is electrically conductively connected to further elements of the printed circuit board 4on the one side and to the torque sensors 8a and 8b on the other side.

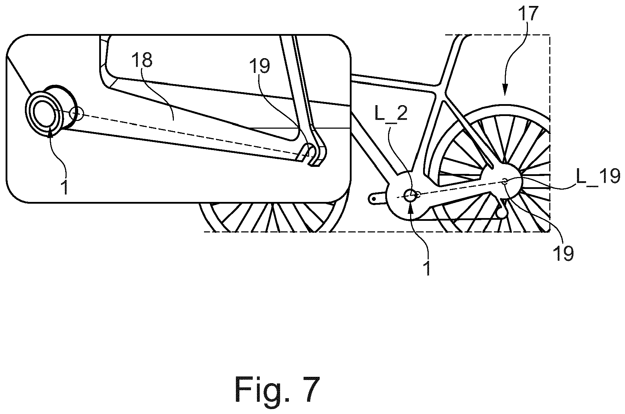

Fig. 7 shows a sectional view of a bicycle 17 according to the invention with the bottom bracket 1 according to the invention. In addition to the bottom bracket 1, the bicycle 17 comprises a frame 18 and a rear axle 19 with a longitudinal center axis L_19. The bottom bracket 1 i.e. the body 2 of the bottom bracket 1 is fixed, for example screwed, to the frame 18. The rear axle 19 and the bottom bracket 1 are aligned to each other in such a way, that the longitudinal center axis L_2 of the body 2 of the bottom bracket 1 and the longitudinal center axis L_19 of the rear axle 19 are aligned parallel to each other.

## Claims

1. Bottom bracket (1) of a bicycle (17),
- wherein the bottom bracket (1) comprises a hollow cylindrical body (2) having a longitudinal center axis (L_2),
- wherein the bottom bracket (1) comprises at least one torque sensor (8a, 8b), preferably at least one strain gauge, and a control unit (3) electrically conductively connected to the torque sensor (8a, 8b), and
- wherein the at least one torque sensor (8a, 8b) is attached to the body (2), **characterized**
**in that** the control unit (3) comprises a gyroscope (10) for determining a rotational position of the body (2) and thereby of the at least one torque sensor (8a, 8b) with respect to the longitudinal center axis (L_2) of the body (2).

2. Bottom bracket (1) according to claim 1,
**characterized**
**in that** the control unit (3) is formed by a printed circuit board (4) and the gyroscope (10) is attached to the printed circuit board (4) in a predefined unchangeable position.

3. Bottom bracket (1) according to claim 1 or 2,
**characterized**
**in that** the control unit (3) is formed by a printed circuit board (4) and the printed circuit board (4) is attached to the body (2) in a predefined unchangeable position relative to the torque sensor (8a, 8b).

4. Bottom bracket (1) according to any one of the preceding claims,
**characterized**
**in that** the torque sensor (8a, 8b) is attached to the body (2) in a predefined unchangeable position.

5. Bottom bracket (1) according to any one of the preceding claims,
**characterized**
**in that** the torque sensor (8a, 8b) is attached to an inner surface (2b) of the body (2) which surrounds the longitudinal center axis (L_2) of the body (2) with a radial distance.

6. Bottom bracket (1) according to any one of the preceding claims,
**characterized**
**in that** the control unit (3) is formed by a printed circuit board (4) and the printed circuit board (4) is attached to an outer surface (2a) of the body (2) which surrounds the longitudinal central axis (L_2) of the body (2) with a radial distance.

7. Bottom bracket (1) according to any one of the preceding claims,
**characterized**
**in that** the torque sensor (8a, 8b) is electrically conductively connected to the control unit (3).

8. Bicycle (17) with an electric motor,
- wherein the bicycle (17) comprises a bottom bracket (1) according to any one of the preceding claims, a frame (18) and a rear axle (19) having a longitudinal central axis (L_19),
- wherein the bottom bracket (1) is attached to the frame (18), preferably screwed or pressed into the frame (18), and
- wherein the bottom bracket (1) and the rear axle (19) are aligned to each other in such a way that the longitudinal center axis (L_2) of the body (2) of the bottom bracket (1) and a longitudinal center axis (L_19) of the rear axle (19) are aligned parallel to each other.

9. Method of detecting torque in a bicycle (17) according to claim 8,
- wherein, during the use of the bicycle (17), a force acting on the bottom bracket (1) is detected by means of the torque sensor (8a, 8b) of the bottom bracket (1) and a value representing a torque is calculated from the detected force by means of the control unit (3) of the bottom bracket (1), and
- wherein, during the use of the bicycle (17), the control unit (3) of the bottom bracket (1) forwards the calculated value to a control unit of the electric motor of the bicycle (17),
**characterized**
- **in that**, before the first use of the bicycle (17), an offset rotational position of the body (2) of the bottom bracket (1) and thereby of the torque sensor (8a, 8b) of the bottom bracket (1) with respect to the longitudinal center axis (L_2) of the body (2) is detected by means of a gyroscope (10) of the control unit (3) of the bottom bracket (1), and
- **in that**, before the first use of the bicycle (17), the torque sensor (8a, 8b) of the bottom bracket (1) is calibrated in accordance with the offset rotational position by means of the control unit (3) of the bottom bracket (1).

10. Method according to claim 9,
**characterized**
- **in that**, during the use of the bicycle (17), a current rotational position of the body (2) of the bottom bracket (1) and thereby of the torque sensor (8a, 8b) of the bottom bracket (1) with respect to the longitudinal central axis (L_2) of the body (2) is detected by means of the gyroscope (10) of the control unit (3) of the bottom bracket (1), and
- **in that**, during the use of the bicycle (17), the torque sensor (8a, 8b) of the bottom bracket (1) is recalibrated in accordance with the current rotational position by means of the control unit (3) of the bottom bracket (1).

11. Method according to claim 9 or 10,
**characterized**
- **in that**, during the use of the bicycle (17), a current rotational position of the body (2) of the bottom bracket (1) and thereby of the torque sensor (8a, 8b) of the bottom bracket (1) with respect to the longitudinal central axis (L_2) of the body (2) is detected by means of the gyroscope (10) of the control unit (3) of the bottom bracket (1), and
- **in that**, during the use of the bicycle (17), a rotation of the body (2) of the bottom bracket (1) and thereby of the torque sensor (8a, 8b) of the bottom bracket (1) around the longitudinal center axis (L_2) of the body (2) is determined from the offset rotational position and the current rotational position by means of the control unit (3) of the bottom bracket (1).

12. Method according to claim 11,
**characterized**
**in that** the control unit (3) of the bottom bracket (1) outputs a warning signal to a user, when the rotation of the body (2) of the bottom bracket (1) and thereby of the torque sensor (8a, 8b) of the bottom bracket (1) around the longitudinal center axis (L_2) of the body (2) exceeds a predefined value.

13. Method according to any one of claims 9 to 12,
**characterized**
- **in that**, during the use of the bicycle (17), data relating to a current tilting position of the bottom bracket (1) with respect to the horizontal and/or a current tilting angle of the bottom bracket (1) and/or a lean angle while cornering with respect to the horizontal and/or a current acceleration of the bottom bracket (1) and/or a current air time of the bicycle (17) are detected by means of the gyroscope (10) of the control unit (3) of the bottom bracket (1), and
- **in that**, during the use of the bicycle (17), the control unit (3) of the bottom bracket (1) forwards the detected data to the control unit of the electric motor of the bicycle (17).
